# EUROPÄISCHE PATENTSCHRIFT

(11) **EP 2 795 161 B1**
(45) Veröffentlichungstag und Bekanntmachung des Hinweises auf die Patenterteilung: **05.10.2016**
(21) Anmeldenummer: 12829172.1
(22) Anmeldetag: 21.12.2012
(51) Int. Cl.: F16H 55/18

(54) **ZAHNRADANORDNUNG MIT FEDERELEMENT**
GEARWHEEL ARRANGEMENT COMPRISING A SPRING ELEMENT
ENSEMBLE DE ROUES DENTÉES À ÉLÉMENT DE RESSORT

(30) Priorität: 22.12.2011 DE 102011122138
(43) Veröffentlichungstag der Anmeldung: 29.10.2014
(73) Patentinhaber: PMG Füssen GmbH, 87629 Füssen (DE)
(72) Erfinder: BLAES, Walter, 87629 Füssen (DE); SCHREIECK, Christoph, 6642 Stanzach (DE); SOIKA, Herbert, 87637 Seeg (DE)
(86) Internationale Anmeldenummer: PCT/DE2012/001218
(87) Internationale Veröffentlichungsnummer: WO 2013/091609

(56) Entgegenhaltungen:
- WO-A1-2010/037457
- JP-A- 8 093 886
- US-A- 1 554 889

## Beschreibung

Die Erfindung betrifft eine Zahnradanordnung mit den Merkmalen des Oberbegriffes des Patentanspruches 1.

Aus AT 508 701 A4 ist eine Zahnradanordnung mit einem Hauptzahnrad und einem gegenüber diesem relativ in Umfangsrichtung verdrehbaren Nebenzahnrad bekannt. Um die Position des verdrehbaren Nebenzahnrades in axialer Richtung am Hauptzahnrad zu sichern, ist ein Sicherungselement In Form eines sogenannten Seegeringes vorgesehen, Dieser Seegering greift In einer umlaufenden Sicherungsnut der Nabe ein.
US 1 554 889 A, DE 10 2005 041 357 A1, DE 10 2009 015 953 A1 und WO 2012/040762 A1 sind weitere Zahnradanordnungen entnehmbar, welche jeweils zwei miteinander verbundene Teilzahnräder aufweisen. Die Verbindung beider Teilzahnräder kann dabei nach Art eines Bajonettverschlusses ausgebildet sein. WO 2010/037457 A1 wird als der nächste Stand der Technik betrachtet und offenbart eine Zahnradanordnung, welche zwei Zahnradhälften aufweist. Ein Bund der ersten Zahnradhälfte soll in einer Ausführungsform in axialer Richtung nicht über die äußerte Seitenfläche der zweiten Zahnradhälfte hinausragen. Mittels eines elastischen Federringes wird eine Axialsicherung zwischen beiden Zahnradhälften erreicht.

Der Erfindung liegt die Aufgabe zugrunde, den Aufbau einer gattungsgemäßen Zahnradanordnung einfacher zu gestalten.

Diese Aufgabe wird durch die Merkmalskombination des unabhängigen Patentanspruches 1 gelöst.

Erfindungsgemäß ist das Nebenzahnrad In Montageposition zu seiner Axialsicherung mittels eines Bajonettverschlusses am Hauptzahnrad gelagert, wobei der Bajonettverschluss derart ausgebildet ist, dass sich ein axiales Nabenfreiende der Nabe in Axialrichtung höchstens so weit erstreckt wie eine Oberflächenebene der dem Hauptzahnrad axial abgewandten äußeren Stirnseite (zumindest ein Abschnitt, Segment, Bereich oder dergleichen dieser Stirnseite) des Nebenzahnrades. Diese Konstruktion schafft einen In Axialrichtung raumsparenden Aufbau der Zahnradanordnung.

Gleichzeitig weist der Bajonettverschluss Sicherungselemente auf, die raumsparend und mechanisch stabil jeweils entweder an der Lochwand des Aufnahmeloches des Nebenzahnrades oder an der einen Außenmantel bildenden radialen Außenseite der Nabe des Hauptzahnrades angeordnet sind. Hierdurch können die Nabe und das Aufnahmeloch bzw. deren Lochwand selbst mit einer entsprechenden geometrischen Ausgestaltung in einer Zusatzfunktion raumsparend auch den Bajonettverschluss bereitstellen, so dass auf weitere Bauteile raumsparend und die Montage erleichternd verzichtet werden kann. So kann beispielsweise auch auf einen herkömmlichen Seegering oder ähnliche Bauteile als separates und zusätzliches Bauteil für die Axialsicherung verzichtet werden. Folglich sind außerhalb des Nebenzahnrades und/oder des Hauptzahnrades Bauteile zur axialen Sicherung nicht erforderlich. Vielmehr ist die axiale Sicherung bzw. der Bajonettverschluss gewissermaßen axial innerhalb der Zahnradanordnung positioniert. Dies unterstützt eine axial kurze Dimensionierung der Nabe. Diese Anordnung ermöglicht es, dass das Zahnradpaar auch in kleinen Bauräumen verwendet werden kann.

Die relative Verdrehbarkeit beider Zahnräder (Haupt- und Nebenzahnrad) gegeneinander ermöglicht einen geräuschminimierenden Spielausgleich, wenn die Zähne der Zahnradanordnung in Eingriff mit einem oder mehreren weiteren Bauteilen, insbesondere weiteren Zahnrädern, sind. Zum Zwecke dieses Spielausgleiches weist die Zahnradanordnung ein Federelement auf, dessen Federkraft in Umfangsrichtung wirkt und eine reversible Verdrehung und auch eine Vorspannung beider Zahnräder (Haupt- und Nebenzahnrad) gegeneinander erreichen kann. Das Federelement liegt dabei vollständig innerhalb der Zahnradanordnung ein und verbessert hierdurch zusätzlich den kompakten, raumsparenden Aufbau der Zahnradanordnung. Außerdem ist das Federelement selbst hierdurch wirksam gegen etwaige Beschädigungen geschützt, was wiederum eine zuverlässige Funktionsweise der Zahnradanordnung unterstützt.

Die Kombination
- des vollständig innerhalb der Zahnradanordnung integrierten Federelementes mit
- den jeweils an der Nabe oder an dem Aufnahmeloch angeordneten Sicherungselementen und mit
- der sich axial höchstens bis zu der dem Hauptzahnrad axial abgewandten äußeren Stirnseite des Nebenzahnrades erstreckenden Nabe
ermöglicht eine Zahnradanordnung, bei der keine Bauteile über die einander axial abgewandten äußeren Stirnflächen bzw. Stirnseiten des Hauptzahnrades und des Nebenzahnrades hinausstehen. Dieser kompakte Aufbau verbessert eine einfache Montage der Zahnradanordnung und deren einfache Handhabung bei einem Einbau in beengte Raumverhältnisse.

Der Körper des Hauptzahnrades und dessen Nabe sind insbesondere einstückig hergestellt, was einen mechanisch stabilen Aufbau der Zahnradanordnung fördert.

Die Nabe weist vorzugsweise eine zentrale Ausnehmung auf zur Aufnahme eines kraftübertragenden Elementes, insbesondere einer Welle.

Vorzugsweise ist das Federelement ringartig ausgebildet und liegt als sogenannter Federring vollständig in einem Ringspalt der Zahnradanordnung ein. Insbesondere ist der Ringspalt an dem Körper des Hauptzahnrades angeordnet, so dass das Nebenzahnrad im Sinne eines axial flachen Aufbaues der Zahnradanordnung keine zusätzliche Aufbauhöhe zur Lagerung des Federelementes berücksichtigen muss.

Eine Vorspannung des Nebenzahnrades in Umfangsrichtung und insbesondere auch eine Begrenzung seiner Verdrehbarkeit in Umfangsrichtung wird in einer bevorzugten Ausführungsform dadurch erzielt, dass das Federelement zwei in dem Ringspalt einliegende offene Ringenden aufweist, welche sich jeweils an einem Stützsteg innerhalb der Zahnradanordnung abstützen. Dabei ist der eine Stützsteg mit dem Hauptzahnrad (insbesondere einstückig) verbunden und der andere Stützsteg mit dem Nebenzahnrad (insbesondere einstückig) verbunden.

In einer bevorzugten Ausführungsform ist ein planer Verlauf wenigstens der axial äußeren Stirnseite bzw. Stirnfläche des Nebenzahnrades entlang der Radialrichtung betrachtet zumindest im Bereich seines Grundkörpers außerhalb der Zähne des Nebenzahnrades realisiert. Folglich erstreckt sich dann die dem Hauptzahnrad axial abgewandte äußere Stirnseite bzw. Stirnfläche des Nebenzahnrades zumindest im Bereich seines Grundkörpers in einer einzigen planen Oberflächenebene. Hierdurch erstreckt sich das Nabenfreiende während der Montageposition der Zahnradanordnung in Axialrichtung höchstens so weit wie die gesamte äußere Oberfläche der vorgenannten axial äußeren Stirnseite des Nebenzahnrades zumindest im Bereich des Nebenzahnrad-Grundkörpers. Dies unterstützt zusätzlich den gewünschten konstruktiv kompakten und raumsparenden Aufbau der Zahnradanordnung.

Vorzugsweise schließt das Nabenfreiende der Nabe des Hauptzahnrades bündig mit der axial äußeren Stirnseite des Nebenzahnrades ab, so dass absatzartige Erhebungen oder Vertiefungen an der Zahnradanordnung auf der äußeren Seite des Nebenzahnrades entlang der Radialrichtung betrachtet vermieden werden können.

Vorzugsweise befindet sich auch die in Axialrichtung sichtbare und in Radialrichtung verlaufende Außenfläche der Zähne des Nebenzahnrades zumindest teilweise oder vollständig in der Oberflächenebene der axial äußeren Stirnseite des Nebenzahnrades.

Ein besonders flacher und kompakter Aufbau der Zahnradanördnung ist möglich, wenn die beiden axial einander abgewandten Stirnseiten bzw. Stirnflächen des Hauptzahnrades und des Nebenzahnrades jeweils in einer einzigen planen Ebene verlaufen. Insbesondere sind diese beiden Ebenen planparallel zueinander ausgerichtet.

Vorzugsweise ist mindestens ein Sicherungselement einstückiger Bestandteil des Hauptzahnrades oder des Nebenzahnrades. Insbesondere sind sämtliche Sicherungselemente jeweils einstückiger Bestandteil des Hauptzahnrades oder des Nebenzahnrades. Mit anderen Worten sind die einzelnen Bestandteile des Bajonettverschlusses vorzugsweise jeweils einstückig an einem der beiden Zahnräder angeordnet, so dass eine einfache und zeitsparende Montage der beiden Zahnräder möglich ist. Ein Verzicht auf weitere Bauteile zur Axialsicherung wirkt zudem platzsparend und kostensparend. Darüber hinaus fördert die Einstückigkeit auch eine wirksame mechanische Stabilität des Bajonettverschlusses und der Axialsicherung zwischen beiden Zahnrädern.

Der Bajonettverschluss ist insbesondere derart ausgebildet, dass ein Sicherungselement entweder als eine sich radial in das Aufnahmeloch hinein oder radial über die Nabe hinaus erstreckende Sicherungsnase ausgebildet ist und in Montageposition in einer Sicherungsnut des jeweils anderen Zahnrades in Umfangsrichtung beweglich einliegt. Mit dieser Ausgestaltung ist der Bajonettverschluss konstruktiv-geometrisch einfach gehalten, was dessen Handhabung bei der Montage und auch bei einer Demontage erleichtert.

Vorzugsweise sind in Umfangsrichtung verteilt mehrere Sicherungsnasen vorgesehen, wodurch eine gleichmäßige Kraftverteilung bei der Axialsicherung unterstützt wird.

Vorteilhaft ist die Sicherungsnut in Umfangsrichtung in sich geschlossen ausgebildet und unterstützt hierdurch eine montagetechnisch einfache Drehsicherung der beiden Zahnräder aneinander.

In einer bevorzugten Ausführungsform mündet die Sicherungsnut axial in eine Sicherungsausnehmung, welche in Umfangsrichtung von zwei Seitenstegen begrenzt ist, wobei die Sicherungsausnehmung in Umfangsrichtung (d.h. im Winkelmaß) mindestens so groß ist wie die Sicherungsnase. Diese geometrische Ausgestaltung verbessert ein montagetechnisch sicheres Eingreifen der beiden Zahnräder ineinander.

### Vorzugsweise sind in Umfangsrichtung verteilt mehrere

Sicherungsausnehmungen vorgesehen. In jeweils eine Sicherungsausnehmung kann insbesondere eine Sicherungsnase eingreifen, wodurch bei Existenz mehrerer Sicherungsnasen eine wirksame Montageführung für ein zentriertes axiales Ineinandergreifen beider Zahnräder während der Montage unterstützt wird.

Eine raumsparende Ausgestaltung des Bajonettverschlusses wird vorteilhaft unterstützt, wenn mindestens einer der Seitenstege, welche die Sicherungsausnehmung in Umfangsrichtung begrenzen, gleichzeitig die Sicherungsnut in Axialrichtung begrenzt.

Vorzugsweise ist die Sicherungsnase bzw. sind die Sicherungsnasen an der Lochwand des Aufnahmeloches angeordnet. Für einen geometrisch einfachen Aufbau des Bajonettverschlusses ragen dann insbesondere sämtliche Sicherungsnasen radial in das Aufnahmeloch hinein. Dieser einfache Aufbau wird weiter unterstützt, indem die korrespondierende Sicherungsnut vorzugsweise an dem Außenmantel der Nabe angeordnet und radial nach außen geöffnet ist.

Vorzugsweise sind die beiden Zahnräder mittels des Bajonettverschlusses lösbar miteinander verbunden. Hierdurch sind Reparaturen an einzelnen Zahnrädern der Anordnung einfacher möglich. Außerdem kann ein einzelnes Zahnrad ausgetauscht werden bzw. ein nicht beschädigtes Zahnrad kann rohstoffsparend weiter verwendet werden.

Vorteilhaft ist die Verdrehbarkeit des Nebenzahnrades gegenüber dem Hauptzahnrad in Umfangsrichtung begrenzt, wodurch konstruktionstechnisch einfach eine axiale Verliersicherung zwischen beiden Zahnrädern unterstützt wird. Die Begrenzung der Verdrehbarkeit erfolgt vorzugsweise mittels des bereits genannten Federelementes zur Vorspannung des Nebenzahnrades. Dabei kann die Begrenzung bzw. das gewünschte größtmögliche Winkelmaß der Verdrehbarkeit durch eine entsprechende geometrische Dimensionierung (z.B. Dicke oder Breite des Federkörper-Querschnittes) des Federelementes realisiert werden.

Die Unterstützung der axialen Verliersicherung ist vorzugsweise derart ausgebildet, dass in Montageposition das Winkelmaß der begrenzten Verdrehbarkeit in Umfangsrichtung kleiner ist als das notwendige Winkelmaß des Bajonettverschlusses in Umfangsrichtung zum Lösen der Verbindung zwischen beiden Zahnrädern. Die vorgenannte Begrenzung der Verdrehbarkeit lässt sich in einer vorteilhaften Ausführungsform aufheben (z.B. mittels einer Demontagevorrichtung), um außerhalb des Betriebseinsatzes der Zahnradanordnung die axiale Verbindung beider Zahnräder gewollt aufheben zu können.

Sofern eine Sicherungsnase als Bestandteil des Bajonettverschlusses verwendet wird, lässt sich in Montageposition die axiale Sicherung konstruktionstechnisch einfach und zuverlässig aufrechterhalten, indem das Winkelmaß der begrenzten Verdrehbarkeit in Umfangsrichtung kleiner ist als das Winkelmaß, das in Umfangsrichtung zum Rückführen der Sicherungsnase in eine zugeordnete Sicherungsausnehmung benötigt wird. Auf diese Weise ist technisch einfach gewährleistet, dass immer mindestens ein Abschnitt der Sicherungsnase in Umfangsrichtung außerhalb der Sicherungsausnehmung verbleibt und somit ein axiales Widerlager gegen ein unerwünschtes Aufheben der axialen Verliersicherung bildet. Je nach Ausführungsform kann in Montageposition entlang der Umfangsrichtung betrachtet die Sicherungsnase mit ihrem kompletten, in Umfangsrichtung verlaufenden Winkelmaß oder lediglich mit einem Anteil dieses Winkelmaßes außerhalb der Sicherungsausnehmung angeordnet sein.

Die Zahnradanordnung wird vorzugsweise zur Kraftübertragung bei dem Antrieb von Aggregaten (z.B. Nebenaggregate, Nockenwelle, Antriebswelle) im Bereich eines Kfz-Antriebsstranges eingesetzt. Auch bei besonders beengten Raumverhältnissen im Motorraum eines Kraftfahrzeuges kann die Zahnradanordnung vorteilhaft verwendet werden.

Das Hauptzahnrad und/oder das Nebenzahnrad werden vorzugsweise pulvermetallurgisch, d.h. durch Sintern (z.B. Sinterstahl) hergestellt.

Die Erfindung wird anhand der in den Zeichnungen dargestellten Ausführungsbeispiele näher erläutert. Es zeigen:
- Fig. 1:: eine perspektivische Explosionsdarstellung der erfindungsgemäßen Zahnradanordnung,
- Fig. 2:: die Zahnradanordnung gemäß Fig.1 in einer Seitenansicht und zusammengebautem Zustand der beiden Zahnräder,
- Fg. 3:: eine geschnittene Seitenansicht der beiden Zahnräder vor dem Zusammenbau,
- Fig. 4: die geschnittene Seitenansicht der beiden Zahnräder gemäß Fig. 3 im zusammengebauten Zustand,
- Fig. 5: eine perspektivische Unteransicht des Hauptzahnrades.

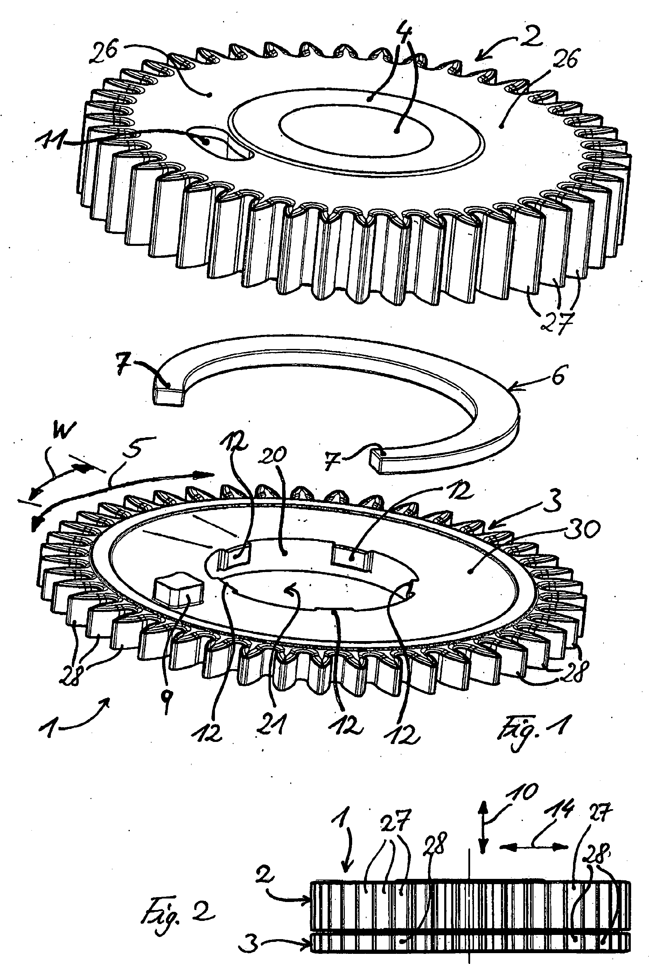

Die Zahnradanordnung 1 gemäß Fig. 1 weist ein Hauptzahnrad 2 und ein Nebenzahnrad 3 auf. Das Hauptzahnrad 2 ist einstückig mit einer Nabe 4 verbunden, welche das Hauptzahnrad 2 trägt. Die Nabe 4 ist in Axialrichtung 10 von einer zentralen Ausnehmung 25 durchsetzt. Diese Ausnehmung 25 kann ein hier nicht dargestelltes, kraftübertragendes Bauteil aufnehmen, insbesondere eine Welle (z.B. Nockenwelle, Antriebswelle etc.). Quer zur Axialrichtung 10 verläuft eine Radialrichtung 14, entlang der sich die beiden Zahnräder 2, 3 radial erstrecken. Am radial äußeren Bereich des Hauptzahnrades sind dessen Zähne 27 angeordnet, während im radial äußeren Bereich des Nebenzahnrades 3 dessen Zähne 28 angeordnet sind.

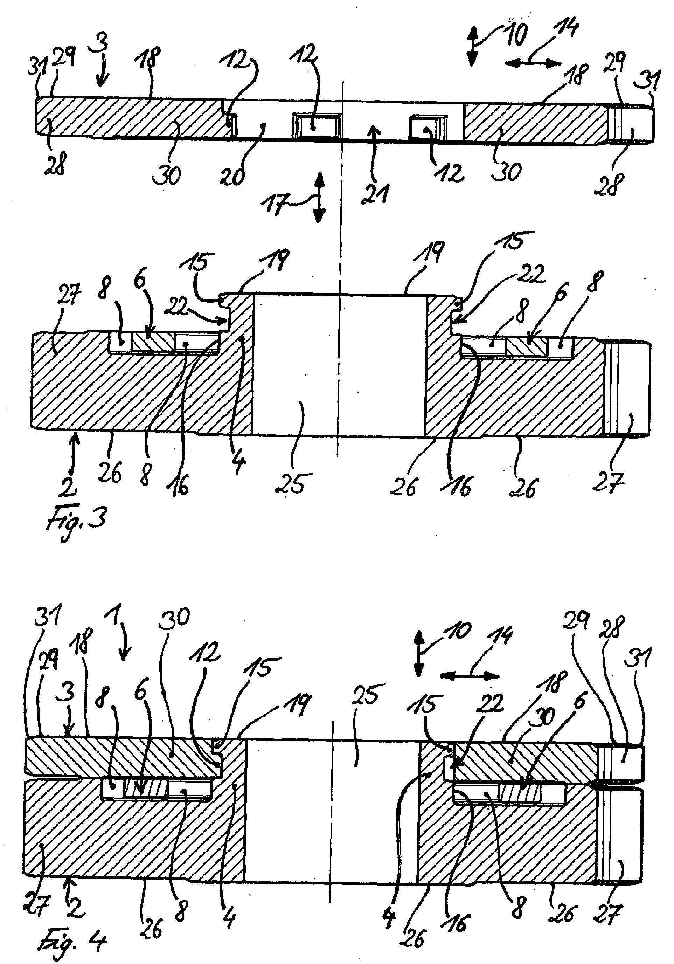

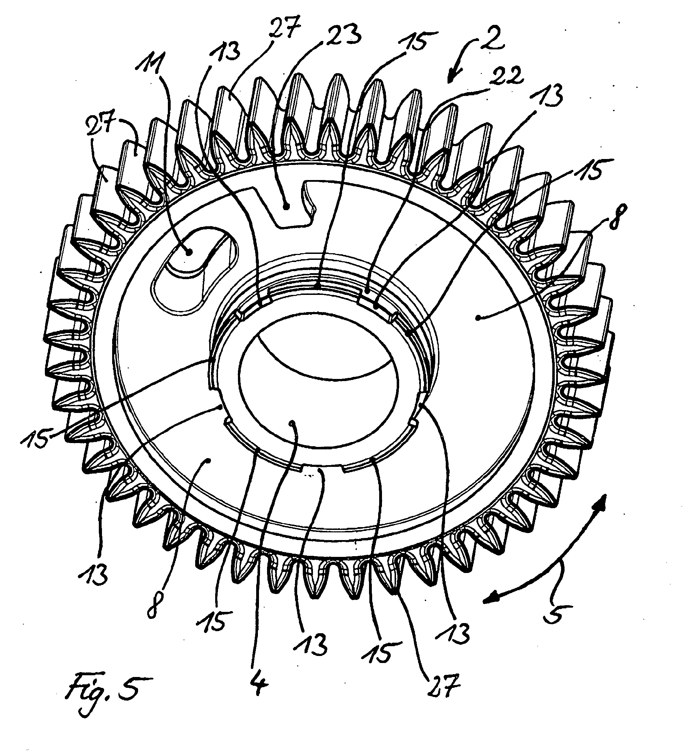

In Montageposition (Fig. 2, Fig. 4) sind die beiden Zahnräder 2, 3 in Umfangsrichtung 5 gegeneinander federelastisch verdrehbar. Zu diesem Zweck wird ein Federring 6 mit zwei offenen Ringenden 7 in einen Ringspalt 8 des Hauptzahnrades 2 eingelegt (Fig. 3, 4). Der Federring 6 liegt vollständig innerhalb des Ringspaltes 8 ein und ist hierdurch in Montageposition der Zahnradanordnung 1 vollständig innerhalb der Zahnradanordnung 1 integriert. Ein Ringende 7 stützt sich in Umfangsrichtung 5 an einem Stützsteg 9 des Nebenzahnrades 3 ab, während sich das andere Ringende 7 an einem Stützsteg 23 des Hauptzahnrades 2 abstützt. Der Stützsteg 9 ist einstückiger Bestandteil des Nebenzahnrades 3. Der Stützsteg 23 ist einstückiger Bestandteil des Hauptzahnrades 2 und im Bereich des Ringspaltes 8 angeordnet (Fig. 5). In Montageposition der Zahnradanordnung 1 liegt der Stützsteg 9 des Nebenzahnrades 3 im Ringspalt 8 ein. Ein hier nicht dargestelltes Betätigungswerkzeug durchsetzt in Axialrichtung 10 ein Langloch 11 des Hauptzahnrades 2 bis in den Ringspalt 8 und hält dort eine Relativposition zwischen dem Stützsteg 9, dem Stützsteg 23 und den Ringenden 7 unter Vorspannung des Federringes 6 in Umfangsrichtung 5 aufrecht, so dass das Nebenzahnrad 3 in Umfangsrichtung 5 relativ zum Hauptzahnrad 2 vorspannbar ist. Im Betriebszustand der Zahnradanordnung 1 ist das Betätigungswerkzeug entfernt worden.

In Montageposition der Zahnradanordnung 1 (Fig. 2, Fig. 4) ist das Nebenzahnrad 3 in Axialrichtung 10 gesichert am Hauptzahnrad 2 gelagert. Die Axialsicherung weist mehrere Sicherungselemente auf. Als Sicherungselemente sind mehrere Sicherungsnasen 12, mehrere Sicherungsausnehmungen 13, mehrere Seitenstege 15 und eine Sicherungsnut 22 vorgesehen. Diese Sicherungselemente 12, 13, 15, 22 wirken nach Art eines Bajonettverschlusses zusammen derart, dass beide Zahnräder 2, 3 in Montageposition (Fig. 2, Fig. 4) nach Art eines Bajonettverschlusses miteinander verbunden sind.

Die Sicherungsnasen 12 sind im Bereich einer Lochwand 20 eines Aufnahmeloches 21 des Nebenzahnrades 3 einstückig mit dem Körper des Nebenzahnrades 3 verbunden. Die übrigen Sicherungselemente 13, 15, 22 sind im Bereich der Nabe 4 einstückiger Bestandteil des Hauptzahnrades 2.

Gemäß Fig. 1 sind fünf Sicherungsnasen 12 an der Lochwand 20 des Aufnahmeloches 21 des Nebenzahnrades 3 angeordnet. Das Aufnahmeloch 21 dient der Aufnahme der Nabe 4 während und nach der Montage der beiden Zahnräder 2, 3. Die Sicherungsnasen 12 sind in Umfangsrichtung 5 voneinander gleichmäßig beabstandet und ragen radial in das Aufnahmeloch 21 hinein. In Montageposition liegen die Sicherungsnasen 12 in der Sicherungsnut 22 ein, welche an der einen Außenmantel bildenden radialen Außenseite 16 der Nabe 4 angeordnet ist und in Umfangsrichtung 5 in sich geschlossen verläuft. Die Sicherungsnut 22 ist radial nach außen geöffnet und mündet axial in insgesamt fünf Sicherungsausnehmungen 13. Diese Sicherungsausnehmungen 13 sind in Umfangsrichtung 5 gleichmäßig voneinander beabstandet und ebenfalls an der radialen Außenseite 16 (d.h. am Umfangsmantel) der Nabe 4 angeordnet. Sie dienen während der Montage der beiden Zahnräder 2, 3 der Aufnahme jeweils einer Sicherungsnase 12. Jede Sicherungsausnehmung 13 ist in Umfangsrichtung 5 von zwei Seitenstegen 15 begrenzt. Dabei ist das Winkelmaß jeder Sicherungsausnehmung 13 in Umfangsrichtung 5 mindestens so groß wie das entsprechende Winkelmaß W der zugeordneten Sicherungsnase 12. Die Seitenstege 15 wirken gleichzeitig als axiale Begrenzungen der Sicherungsnut 22 in Richtung des axialen Nabenfreiendes 19 der Nabe 4. Ein Teil der Sicherungselemente, nämlich die Sicherungsausnehmungen 13 und die Seitenstege 15, sind entlang der Axialrichtung 10 betrachtet im Bereich des Nabenfreiendes 19 der Nabe 4 angeordnet.

Während der Montage werden das Nebenzahnrad 3 und das Hauptzahnrad 2 axial in Transportrichtung 17 relativ aufeinander zu bewegt. In Umfangsrichtung 5 sind beide Zahnräder 2, 3 derart zueinander angeordnet, dass die Sicherungsnasen 12 der Lochwand 20 die Sicherungsausnehmungen 13 der Nabe 4 durchsetzen können, bis sie in der Sicherungsnut 22 einliegen. Sodann werden die beiden Zahnräder 2, 3 in Umfangsrichtung 5 gegeneinander verdreht, so dass die Seitenstege 15 als axiale Widerlager für die Sicherungsnasen 12 wirken. Auf diese Weise ist der Bajonettverschluss realisiert.

Während des Betriebes der Zahnradanordnung ist die Verdrehbarkeit des Nebenzahnrades 3 gegenüber dem Hauptzahnrad 2 begrenzt. Die Begrenzung wird mittels der entsprechend dimensionierten Federkraft des Federringes 6 erzielt. In Umfangsrichtung 5 ist deshalb das Winkelmaß der Verdrehbarkeit des Nebenzahnrades 3 kleiner als das minimale Winkelmaß des Bajonettverschlusses, welches zum Lösen der Verbindung zwischen beiden Zahnrädern benötigt wird. Zu diesem Zweck ist das Winkelmaß der Verdrehbarkeit des Nebenzahnrades 3 in Umfangsrichtung 5 kleiner als notwendig wäre, um das in Umfangsrichtung 5 verlaufende, vollständige Winkelmaß W der Sicherungsnasen 12 in die zugeordneten Sicherungsausnehmungen 13 zurückzuführen.

Soll der Bajonettverschluss gelöst werden, wird mittels einer hier nicht dargestellten Hilfsvorrichtung das Nebenzahnrad 3 relativ zum Hauptzahnrad 2 gegen die Federkraft des Federringes 6 verdreht, bis die Sicherungsnasen 12 in Axialrichtung 10 derart mit den Sicherungsausnehmungen 13 fluchten, dass das Nebenzahnrad 3 axial von dem Hauptzahnrad 2 entfernt werden kann.

In Montageposition fluchtet die Oberfläche der dem Hauptzahnrad 2 und dessen Ringspalt 8 axial abgewandten äußeren Stirnfläche oder Stirnseite 18 des Nebenzahnrades 3 mit dem axialen Nabenfreiende 19 der Nabe 4. Die Nabe 4 kann axial derart kurz aufgebaut sein, da die Sicherungselemente 12, 13, 15, 22 bzw. der Bajonettverschluss axial innerhalb der Zahnradanordnung 1 positioniert sind bzw. ist. Mit anderen Worten sind die Sicherungselemente 12, 13, 15, 22 bzw. der Bajonettverschluss axial zwischen der Stirnseite 18 des Nebenzahnrades 3 und einer Stirnseite 26 des Hauptzahnrades 2 angeordnet. Die beiden genannten Stirnseiten 18, 26 sind axial einander abgewandt angeordnet und bilden die beiden axial äußeren Oberflächen der Zahnradanordnung 1. Die axial äußere Stirnseite 18 des Nebenzahnrades 3 erstreckt sich in einer planen Ebene parallel zur Radialrichtung 14. Lediglich die in Radialrichtung 14 verlaufende Außenfläche 29 der sich an einen Grundkörper 30 des Nebenzahnrades 3 anschließenden Zähne 28 weicht gegebenenfalls zumindest teilweise von der Ebene der Stirnfläche bzw. Stirnseite 18 ab. Im Ausführungsbeispiel ist diese Abweichung im Bereich einer radial äußeren Zahnfase 31 der Zähne 28 gegeben (Fig. 3, Fig. 4).

Die Zähne 28 des Nebenzahnrades 3 bilden in Montageposition bzw. im Betriebseinsatz gewissermaßen eine axiale Verlängerung der Zähne 27 des Hauptzahnrades 2 (Fig. 2).

Der Ordnung halber sei darauf hingewiesen, dass die in den Zeichnungen dargestellten Bauteile und Details nicht notwendigerweise maßstäblich dargestellt sind.

## Patentansprüche

1. Zahnradanordnung (1) mit einer Nabe (4), einem von der Nabe (4) getragenen Hauptzahnrad (2) und einem Nebenzahnrad (3), welches
- ein Aufnahmeloch (21) zur Aufnahme der Nabe (4) aufweist,
- gegenüber dem Hauptzahnrad (2) In Umfangsrichtung (5) verdrehbar und mittels eines vollständig innerhalb der Zahnradanordnung (1) einllegende Federelementes (6) in Umfangsrichtung (5) vorspannbar Ist, und
- in einer Montageposition der Zahnradanordnung (1) in Axialrichtung (10) gesichert am Hauptzahnrad (2) gelagert ist,
wobei zur Axialsicherung an der Lochwand (20) des Aufnahmelochas (21) und an der Außenseite (16) der Nabe (4) jeweils mindestens ein Sicherungselement (12, 13, 15, 22) angeordnet Ist, welche mitelnander zusammenwirken derart, dass beide Zahnräder (2, 3) in Montageposition nach Art eines Bajonettverschlusses miteinander verbunden sind, und
wobei in Montageposition sich ein axiales Nabenfreiende (19) der Nabe (4) in Axialrichtung (10) höchstens bis zu einer Ebene der dem Hauptzahnrad (2) axial abgewandten äußeren Stirnseite (18) des Nebenzahnrades (3) erstreckt.

2. Zahnradanordnung nach Anspruch 1,
**dadurch gekennzeichnet, dass**
das Federelement als Federring (6) vollständig in einem Ringspalt (8) der Zahnradanordnung (1) einliegt.

3. Zahnradanordnung nach Anspruch 2.
**dadurch gekennzeichnet, dass**
das Federelement (6) zwei In dem Ringspalt (8) einliegende offene Ringenden (7) aufweist, wobei sich das eine Ringende (7) in Umfangsrichtung (5) an einem Stützsteg (23) des Hauptzahnrades (2) abstützt und sich das andere Ringende (7) in Umfangsrichtung (5) an einem Stützsteg (9) des Nebenzahnrades (3) abstützt.

4. Zahnradanordnung nach einem der vorhergehenden Ansprüche,
**dadurch gekennzeichnet, dass**
sich wenigstens die dem Hauptzahnrad (2) axial abgewandte äußere Stirnseite (18) des Nebenzahnrades (3) zumindest im Bereich seines Grundkörpers (30) radial außerhalb seiner Zähne (28) in einer einzigen planen Ebene erstreckt.

5. Zahnradanordnung nach einem der vorhergehenden Ansprüche,
**dadurch gekennzeichnet, dass**
mindestens ein Sicherungselement (12, 13, 15, 22) einstückiger Bestandteil des Hauptzahnrades (2) oder des Nebenzahnrades (3) ist.

6. Zahnradanordnung nach einem der vorhergehenden Ansprüche,
**dadurch gekennzeichnet, dass**
ein Sicherungselement
- als eine sich radial in das Aufnahmeloch (21) hinein oder radial über die Nabe (4) hinaus erstreckende Sicherungsnase (12) ausgebildet ist und
- in Montageposition in einer Sicherungsnut (22) des jeweils anderen Zahnrades (2, 3) in Umfangsrichtung (5) beweglich einliegt.

7. Zahnradanordnung nach Anspruch 6,
**dadurch gekennzeichnet, dass**
in Umfangsrichtung (5) mehrere voneinander beabstandete Sicherungsnasen (12) vorgesehen sind.

8. Zahnradanordnung nach Anspruch 6 oder 7,
**dadurch gekennzeichnet, dass**
die Sicherungsnut (22) in sich geschlossen ist.

9. Zahnradanordnung nach einem der Ansprüche 6 bis 8,
**dadurch gekennzeichnet, dass**
die Sicherungsnut (22) axial in eine Sicherungsausnehmung (13) mündet, welche in Umfangsrichtung (5) von zwei Seitenstegen (15) begrenzt ist, wobei die Sicherungsausnehmung (13) in Umfangsrichtung (5) mindestens so groß ist wie die Sicherungsnase (12).

10. Zahnradanordnung nach Anspruch 9,
**dadurch gekennzeichnet, dass**
in Umfangsrichtung (5) voneinander beabstandet mehrere Sicherungsausnehmungen (13) vorgesehen sind.

11. Zahnradanordnung nach Anspruch 9 oder 10,
**dadurch gekennzeichnet, dass**
mindestens ein Seitensteg (15) als eine axiale Begrenzung der Sicherungsnut (22) ausgebildet ist.

12. Zahnradanordnung nach einem der Ansprüche 6 bis 11,
**dadurch gekennzeichnet, dass**
die Sicherungsnase (12) oder die Sicherungsnasen (12) an der Lochwand (20) des Aufnahmeloches (21) angeordnet ist oder sind.

13. Zahnradanordnung nach einem der Ansprüche 6 bis 12,
**dadurch gekennzeichnet, dass**
die Sicherungsnut (22) an der Außenseite (16) der Nabe (4) des Hauptzahnrades (2) angeordnet und radial nach außen geöffnet ist.

14. Zahnradanordnung nach einem der vorhergehenden Ansprüche,
**dadurch gekennzeichnet, dass**
die Verbindung der beiden Zahnräder (2, 3) lösbar ausgebildet ist.

15. Zahnradanordnung nach einem der vorhergehenden Ansprüche,
**dadurch gekennzeichnet, dass**
in Montageposition die Verdrehbarkeit des Nebenzahnrades (3) gegenüber dem Hauptzahnrad (2) in Umfangsrichtung (5) mittels des Federelementes (6) begrenzt ist.

16. Zahnradanordnung nach Anspruch 15,
**dadurch gekennzeichnet, dass**
in Montageposition das Winkelmaß der Verdrehbarkeit in Umfangsrichtung (5) kleiner ist als das Winkelmaß des Bajonettverschlusses in Umfangsrichtung (5) zum Lösen der Verbindung zwischen beiden Zahnrädern (2, 3).

## Claims

1. A gearwheel arrangement (1) comprising a hub (4), a main gearwheel (2) supported by the hub (4), and a secondary gearwheel (3) which
- has a receiving hole (21) for receiving the hub (4),
- is rotatable in the circumferential direction (5) in relation to the main gearwheel (2) and can be pretensioned in the circumferential direction (5) by means of a spring element (6) completely enclosed within the gearwheel arrangement (1), and,
- in a mounting position of the gearwheel arrangement (1), is mounted on the main gearwheel (2) so as to be secured in the axial direction (10),
wherein, for the axial securing, at least one securing element (12, 13, 15, 22) is arranged in each case on the hole wall (20) of the receiving hole (21) and on the outside (16) of the hub (4), said securing elements (12, 13, 15, 22) interacting with one another in such a manner that, in the mounting position, the two gearwheels (2, 3) are connected to each other in the manner of a bayonet catch, and
wherein, in the mounting position, an axial hub free end (19) of the hub (4) extends in the axial direction (10) at most as far as a plane of the outer end side (18) of the secondary gearwheel (3), said end side (18) facing axially away from the main gearwheel (2).

2. The gearwheel arrangement as claimed in claim 1, **characterized in that** the spring element in the form of a spring ring (6) is completely enclosed in an annular gap (8) of the gearwheel arrangement (1).

3. The gearwheel arrangement as claimed in claim 2, **characterized in that** the spring element (6) has two open ring ends (7) enclosed in the annular gap (8), wherein one ring end (7) is supported in the circumferential direction (5) on a supporting web (23) of the main gearwheel (2) and the other ring end (7) is supported in the circumferential direction (5) on a supporting web (9) of the secondary gearwheel (3).

4. The gearwheel arrangement as claimed in one of the preceding claims, **characterized in that** at least the outer end side (18) of the secondary gearwheel (3), which end side (18) faces axially away from the main gearwheel (2), at least in the region of the main body (30) radially outside the teeth (28) of said secondary gearwheel (3), extends in a single flat plane.

5. The gearwheel arrangement as claimed in one of the preceding claims, **characterized in that** at least one securing element (12, 13, 15, 22) is an integral part of the main gearwheel (2) or the secondary gearwheel (3).

6. The gearwheel arrangement as claimed in one of the preceding claims, **characterized in that** a securing element
- is designed as a securing lug (12) which extends radially into the receiving hole (21) or radially beyond the hub (4), and
- in a mounting position, is enclosed movably in the circumferential direction (5) in a securing groove (22) of the other gearwheel (2, 3) in each case.

7. The gearwheel arrangement as claimed in claim 6, **characterized in that** a plurality of spaced-apart securing lugs (12) are provided in the circumferential direction (5).

8. The gearwheel arrangement as claimed in claim 6 or 7, **characterized in that** the securing groove (22) is formed continuously.

9. The gearwheel arrangement as claimed in one of claims 6 to 8, **characterized in that** the securing groove (22) opens axially into a securing recess (13) which is bounded in the circumferential direction (5) by two side webs (15), wherein the securing recess (13) is at least as large in the circumferential direction (5) as the securing lug (12).

10. The gearwheel arrangement as claimed in claim 9, **characterized in that** a plurality of securing recesses (13) are provided spaced apart from one another in the circumferential direction (5).

11. The gearwheel arrangement as claimed in claim 9 or 10, **characterized in that** at least one side web (15) is designed as an axial boundary of the securing groove (22).

12. The gearwheel arrangement as claimed in one of claims 6 to 11, **characterized in that** the securing lug (12) or the securing lugs (12) is or are arranged on the hole wall (20) of the receiving hole (21).

13. The gearwheel arrangement as claimed in one of claims 6 to 12, **characterized in that** the securing groove (22) is arranged on the outside (16) of the hub (4) of the main gearwheel (2) and is open radially to the outside.

14. The gearwheel arrangement as claimed in one of the preceding claims, **characterized in that** the connection between the two gearwheels (2, 3) is designed so as to be releasable.

15. The gearwheel arrangement as claimed in one of the preceding claims, **characterized in that**, in the mounting position, the rotatability of the secondary gearwheel (3) in the circumferential direction (5) in relation to the main gearwheel (2) is bounded by means of the spring element (6).

16. The gearwheel arrangement as claimed in claim 15, **characterized in that**, in the mounting position, the angular dimension of the rotatability in the circumferential direction (5) is smaller than the angular dimension of the bayonet catch in the circumferential direction (5) required for releasing the connection between the two gearwheels (2, 3).

## Revendications

1. Agencement de roues dentées (1) comprenant un moyeu (4), une roue dentée principale (2) portée par le moyeu (4) et une roue dentée secondaire (3)
- qui présente un trou de réception (21) pour recevoir le moyeu (4),
- qui peut tourner par rapport à la roue dentée principale (2) dans la direction périphérique (5) et qui peut être précontrainte dans la direction périphérique (5) au moyen d'un élément de ressort (6) pénétrant complètement à l'intérieur de l'agencement de roues dentées (1), et
- qui est supportée dans une position de montage de l'agencement de roues dentées (1) sur la roue dentée principale (2) de manière fixée dans la direction axiale (10),
à chaque fois au moins un élément de fixation (12, 13, 15, 22) étant disposé, pour la fixation axiale, sur la paroi (20) du trou de réception (21) et sur le côté extérieur (16) du moyeu (4), les éléments de fixation (12, 13, 15, 22) coopérant les uns avec les autres de telle sorte que les deux roues dentées (2, 3), dans la position de montage, soient connectées l'une à l'autre à la manière d'une fermeture à baïonnette, et
une extrémité axiale libre de moyeu (19) du moyeu (4), dans la position de montage, s'étendant dans la direction axiale (10) au maximum jusqu'à un plan du côté frontal extérieur (18) de la roue dentée secondaire (3) axialement opposé à la roue dentée principale (2).

2. Agencement de roues dentées selon la revendication 1,
**caractérisé en ce que**
l'élément de ressort, en tant que bague de ressort (6), pénètre complètement dans une fente annulaire (8) de l'agencement de roues dentées (1).

3. Agencement de roues dentées selon la revendication 2,
**caractérisé en ce que**
l'élément de ressort (6) présente deux extrémités de bague ouvertes (7) pénétrant dans la fente annulaire (8), l'une des extrémités de bague (7) s'appuyant dans la direction périphérique (5) contre une nervure de support (23) de la roue dentée principale (2) et l'autre extrémité de bague (7) s'appuyant dans la direction périphérique (5) contre une nervure de support (9) de la roue dentée secondaire (3).

4. Agencement de roues dentées selon l'une quelconque des revendications précédentes,
**caractérisé en ce**
**qu'**au moins le côté frontal extérieur (18) de la roue dentée secondaire (3) axialement opposé à la roue dentée principale (2) s'étend au moins dans la région de son corps de base (30) radialement à l'extérieur de ses dents (28) dans un plan plat unique.

5. Agencement de roues dentées selon l'une quelconque des revendications précédentes,
**caractérisé en ce**
**qu'**au moins un élément de fixation (12, 13, 15, 22) est réalisé d'une seule pièce avec la roue dentée principale (2) ou la roue dentée secondaire (3).

6. Agencement de roues dentées selon l'une quelconque des revendications précédentes,
**caractérisé en ce**
**qu'**un élément de fixation
- est réalisé sous forme d'ergot de fixation (12) s'étendant radialement à l'intérieur du trou de réception (21) ou radialement au-delà du moyeu (4) et
- pénètre de manière déplaçable dans la direction périphérique (5), dans la position de montage, dans une rainure de fixation (22) de l'autre roue dentée respective (2, 3).

7. Agencement de roues dentées selon la revendication 6,
**caractérisé en ce que**
plusieurs ergots de fixation espacés les uns des autres (12) sont prévus dans la direction périphérique (5).

8. Agencement de roues dentées selon la revendication 6 ou 7,
**caractérisé en ce que**
la rainure de fixation (22) est fermée sur elle-même.

9. Agencement de roues dentées selon l'une quelconque des revendications 6 à 8,
**caractérisé en ce que**
la rainure de fixation (22) débouche axialement dans un évidement de fixation (13) qui est limité dans la direction périphérique (5) par deux nervures latérales (15), l'évidement de fixation (13), dans la direction périphérique (5), étant au moins aussi grand que l'ergot de fixation (12).

10. Agencement de roues dentées selon la revendication 9,
**caractérisé en ce que**
plusieurs évidements de fixation espacés les uns des autres (13) sont prévus dans la direction périphérique (5).

11. Agencement de roues dentées selon la revendication 9 ou 10, **caractérisé en ce qu'**au moins une nervure latérale (15) est réalisée sous forme de limitation axiale de la rainure de fixation (22).

12. Agencement de roues dentées selon l'une quelconque des revendications 6 à 11,
**caractérisé en ce que**
l'ergot de fixation (12) ou les ergots de fixation (12) est ou sont disposé(s) sur la paroi (20) du trou de réception (21).

13. Agencement de roues dentées selon l'une quelconque des revendications 6 à 12,
**caractérisé en ce que**
la rainure de fixation (22) est disposée au niveau du côté extérieur (16) du moyeu (4) de la roue dentée principale (2) et est ouverte radialement vers l'extérieur.

14. Agencement de roues dentées selon l'une quelconque des revendications précédentes,
**caractérisé en ce que**
la connexion des deux roues dentées (2, 3) est réalisée de manière desserrable.

15. Agencement de roues dentées selon l'une quelconque des revendications précédentes,
**caractérisé en ce que**
dans la position de montage, la rotation de la roue dentée secondaire (3) par rapport à la roue dentée principale (2) dans la direction périphérique (5) est limitée au moyen de l'élément de ressort (6).

16. Agencement de roues dentées selon la revendication 15,
**caractérisé en ce que**
dans la position de montage, la mesure angulaire de la rotation dans la direction périphérique (5) est inférieure à la mesure angulaire de la fermeture à baïonnette dans la direction périphérique (5) pour desserrer la connexion entre les deux roues dentées (2, 3).
